(19) Europäisches Patentamt / European Patent Office / Office européen des brevets

(11) **EP 4 534 227 A1**

(12) **EUROPEAN PATENT APPLICATION**
published in accordance with Art. 153(4) EPC

(43) Date of publication:
**09.04.2025 Bulletin 2025/15**

(21) Application number: **23816148.3**

(22) Date of filing: **01.06.2023**

(51) International Patent Classification (IPC):
**B23K 11/16** *(2006.01)*    **B23K 11/11** *(2006.01)*

(52) Cooperative Patent Classification (CPC):
**B23K 11/11; B23K 11/16**

(86) International application number:
**PCT/JP2023/020489**

(87) International publication number:
**WO 2023/234391 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.06.2022 JP 2022089551**

(71) Applicant: NIPPON STEEL CORPORATION
Chiyoda-ku
Tokyo 100-8071 (JP)

(72) Inventors:
• OKADA, Tohru
Tokyo 100-8071 (JP)
• AZUMA, Masafumi
Tokyo 100-8071 (JP)
• NISHIO, Takuya
Tokyo 100-8071 (JP)
• FURUSAKO, Seiji
Tokyo 100-8071 (JP)

(74) Representative: Vossius & Partner
Patentanwälte Rechtsanwälte mbB
Siebertstrasse 3
81675 München (DE)

(54) **SPOT WELDED JOINT AND METHOD FOR MANUFACTURING SPOT WELDED JOINT**

(57)     A spot-welded joint according to one aspect of the present disclosure includes a first steel sheet, a second steel sheet, and a spot-welding portion that joins the first steel sheet and the second steel sheet, in which the first steel sheet and the second steel sheet are directly overlapped with each other, the tensile strength of the first steel sheet is 1500 MPa or more, the tensile strength of the second steel sheet is equal to or less than the tensile strength of the first steel sheet, the Vickers hardness from a surface of the first steel sheet to a depth of 20 $\mu$m is 95% or less of the Vickers hardness at a position of 1/4 of a sheet thickness of a base material portion of the first steel sheet, a carbon equivalent Ceq of the base material portion of the first steel sheet is 0.22% or more, $HC = Ceq \times TS_2 \times (1 - (TS_2 \times t_2^3)/(TS_1 \times t_1^3))/\sqrt{t_2}$ is 170 or more, and the spot-welding portion includes a nugget and a corona bond area that joins the first steel sheet and the second steel sheet around the nugget, and the Vickers hardness of 20 $\mu$m on a first steel sheet side at an outer peripheral side end portion of the corona bond area is lower by 50 Hv or more than the Vickers hardness at the position of 1/4 of the sheet thickness of the base material portion of the first steel sheet.

FIG. 1

EP 4 534 227 A1

## Description

Technical Field

The present disclosure relates to a spot-welded joint and a method for manufacturing a spot-welded joint.

Priority is claimed on Japanese Patent Application No. No. 2022-089551 filed in Japan on June 1, 2022, the content of which is incorporated herein by reference.

Background Art

Resistance spot welding can join steel sheets inexpensively and quickly. Therefore, resistance spot welding is used in various applications such as joining of high strength steel sheets which are materials of automobile body members.

On the other hand, in the automobile field, the high-strengthening and reducing the thickness of the steel sheet have been increased. By increasing the high-strengthening and reducing the thickness of the steel sheet, it is possible to reduce the weight of the automobile body member while maintaining the high-strengthening of the automobile body member and to obtain an effect such as improvement in fuel efficiency.

Here, in a high strength steel sheet, for example, a steel sheet having the tensile strength of 1300 MPa class, 1500 MPa class, 1800 MPa class, or the like, a decrease in joining strength and hydrogen embrittlement in a joint portion of a spot-welded joint are problems. One of the reasons is that the toughness of the nugget decreases as the C content in the nugget (melted portion) increases. In the high strength steel sheet, the metallographic structure is optimized by applying heat treatment under various conditions. This ensures the toughness of the high strength steel sheet. However, when the high strength steel sheet is spot-welded, the metallographic structure changes in the nugget and the HAZ (Heat Affected Zone) around the nugget. As a result, embrittlement of the nugget occurs. From the viewpoint of securing the joining strength of the spot-welded joint, a joining method for suppressing embrittlement of the nugget is required.

In the prior art, a method of securing joint strength and preventing hydrogen embrittlement has been proposed by a method of enlarging the nugget diameter and modifying the nugget portion by post energizing. However, these methods have problems that the takt time increases and the proper welding condition range is narrow.

In addition, a technique for improving joint strength and preventing hydrogen embrittlement by providing a decarburization layer on a surface layer of a steel sheet before spot-welding has also been studied.

For example, Patent Document 1 discloses a joining structure including: a first member made of high tensile strength steel; a second member made of high tensile strength steel, the second member being overlaid on the first member; a surface soft layer formed on at least one of an overlaid surface of the first member with the second member or an overlaid surface of the second member with the first member; a melted and solidified portion formed by melting and solidifying the first member and the second member; and a heat-affected zone formed around the melted and solidified portion, in which the total thickness of the surface soft layer is 5 $\mu$m or more and 200 $\mu$m or less, a carbon amount of the melted and solidified portion is 0.35 mass% or more, and the maximum Vickers hardness of the surface soft layer in the heat-affected zone is 100 Hv or more and 500 Hv or less.

Patent Document 2 discloses a steel sheet having excellent spot-welding portion fracture characteristics, in which the ratio (Hs/Hm) of the hardness Hs of the surface layer of the steel sheet to the hardness Hm of the central part of the steel sheet is 0.4 or more and 0.8 or less.

Citation List

Patent Documents

Patent Document 1
Japanese Unexamined Patent Application, First Publication No. 2020-82103
Patent Document 2
Japanese Unexamined Patent Application, First Publication No. 2017-2384

Summary of Invention

Technical Problem

A typical spot-welding portion is constituted of a nugget which is a melted and solidified portion, a corona bond area formed around the nugget, and a HAZ (Heat Affected Zone). The corona bond area is a region where melting and solidification do not occur but two steel sheets are solid-phase joined. The corona bond area is also referred to as a pressure-contact surface or a corona bond. The HAZ is a region in which melting and solidification does not occur, but the metallographic structure, the metallurgical properties, the mechanical properties, and the like are changed by the influence of welding heat.

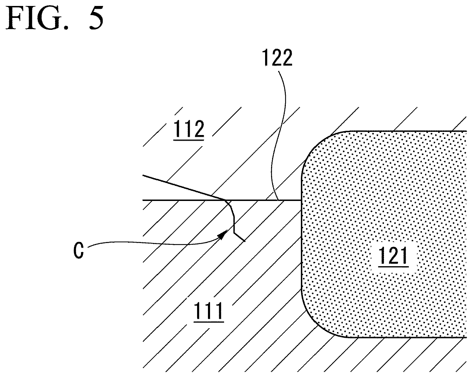

The present inventors have found that when a sheet set constituted of a plurality of steel sheets including one or more high strength steel sheets and having different tensile strengths and/or thicknesses of the steel sheets is spot-welded, cracks of a unique form occur. Specifically, as shown in FIG. 5, cracks progressing in the thickness direction of the steel sheet were confirmed in the HAZ in the vicinity of the outer peripheral side end portion of the corona bond area. The outer peripheral side end portion of the corona bond area is visually recognized as a corona bond area end opposite to the nugget in the cross section of the nugget.

Such HAZ cracks in the vicinity of the outer peripheral side end portion of the rolled surface cannot be eliminated even if the amount of carbon in the nugget is diluted by constituting the sheet set of high carbon steel and low carbon steel, for example. In addition, as described in Patent Document 1 or 2, in the same strength and the same thickness sheet set or the sheet set of high carbon steel and mild steel, the risk of occurrence of HAZ cracks in the vicinity of the outer peripheral side end portion of the corona bond area is low. Patent Document 1 or 2 does not sufficiently study the suppression of such cracks.

**In** view of the above circumstances, an object of the present disclosure is to provide a spot-welded joint including a plurality of steel sheets constituted of one or more high strength steel sheets and having different tensile strengths and/or thicknesses, the spot-welded joint being capable of suppressing HAZ cracks in the vicinity of an outer peripheral side end portion of a corona bond area, and a method for manufacturing the spot-welded joint.

Solution to Problem

The gist of the present disclosure is as follows.

(1) A spot-welded joint according to one aspect of the present disclosure includes a first steel sheet, a second steel sheet, and a spot-welding portion that joins the first steel sheet and the second steel sheet, in which the first steel sheet and the second steel sheet are directly overlapped with each other, the tensile strength of the first steel sheet is 1500 MPa or more, the tensile strength of the second steel sheet is equal to or less than the tensile strength of the first steel sheet, the Vickers hardness from a surface of the first steel sheet to a depth of 20 $\mu$m is 95% or less of the Vickers hardness at a position of 1/4 of a sheet thickness of a base material portion of the first steel sheet, a carbon equivalent Ceq defined by a formula 1 of the base material portion of the first steel sheet is 0.22% or more, an index HC defined by a formula 2 is 170 or more, the spot-welding portion includes a nugget and a corona bond area that joins the first steel sheet and the second steel sheet around the nugget, and the Vickers hardness of 20 $\mu$m on a first steel sheet side at an outer peripheral side end portion of the corona bond area is lower by 50 Hv or more than the Vickers hardness at the position of 1/4 of the sheet thickness of the base material portion of the first steel sheet.

$$Ceq = C + Si/90 + (Mn + Cr)/100 \text{ (formula 1)}$$

$$HC = Ceq \times TS_2 \times (1 - (TS_2 \times t_2^3)/(TS_1 \times t_1^3))/\sqrt{t_2} \text{ (formula 2)}$$

An element symbol described in the formula 1 is a content in mass% of an element corresponding to the element symbol in a sheet thickness 1/4 portion of the base material portion of the first steel sheet, and a symbol $TS_1$ described in the formula 2 is the tensile strength in MPa of the first steel sheet, $t_1$ is a sheet thickness in mm of the first steel sheet, $TS_2$ is the tensile strength in MPa of the second steel sheet, and $t_2$ is a sheet thickness in mm of the second steel sheet.

(2) Preferably, in the spot-welded joint according to (1), the base material portion of the first steel sheet includes a martensite structure.

(3) Preferably, in the spot-welded joint according to (1) or (2), the Vickers hardness from the surface of the first steel sheet to a depth of 50 $\mu$m is 95% or less of the Vickers hardness at the position of 1/4 of the sheet thickness of the base material portion of the first steel sheet, and the Vickers hardness of 50 $\mu$m on the first steel sheet side at the outer peripheral side end portion of the corona bond area is lower by 50 Hv or more than the Vickers hardness at the position of 1/4 of the sheet thickness of the base material portion of the first steel sheet.

(4) Preferably, in the spot-welded joint according to any one of (1) to (3), the Vickers hardness from the surface of the first steel sheet to a depth of 100 $\mu$m is 95% or less of the Vickers hardness at the position of 1/4 of the sheet thickness of the base material portion of the first steel sheet, and the Vickers hardness of 100 $\mu$m on the first steel sheet side at the outer peripheral side end portion of the corona bond area is lower by 50 Hv or more than the Vickers hardness at the position of 1/4 of the sheet thickness of the base material portion of the first steel sheet.

(5) Preferably, in the spot-welded joint according to any one of (1) to (4), the Vickers hardness from the surface of the first steel sheet to a depth of 200 $\mu$m is 95% or less of the Vickers hardness at the position of 1/4 of the sheet thickness of the base material portion of the first steel sheet, and the Vickers hardness of 200 $\mu$m on the first steel sheet side at the outer peripheral side end portion of the corona bond area is lower by 50 Hv or more than the Vickers hardness at the position of 1/4 of the sheet thickness of the base material portion of the first steel sheet.

(6) A method for manufacturing a spot-welded joint according to another aspect of the present disclosure includes: overlapping a first steel sheet and a second steel sheet; and spot-welding the first steel sheet and the second steel sheet, in which the tensile strength of the first steel sheet is 1500 MPa or more, the tensile strength of the second steel sheet is equal to or less than the tensile strength of the first steel sheet, the Vickers hardness from a surface of the first steel sheet to a depth of 20 $\mu$m is 95% or less of the Vickers hardness at a position of 1/4 of a sheet thickness of a base material portion of the first steel sheet, a carbon equivalent Ceq defined by a formula 1 of the base material portion of the first steel sheet is 0.22% or more, and an index HC defined by a formula 2 is 170 or more.

$$Ceq = C + Si/90 + (Mn + Cr)/100 \text{ (formula 1)}$$

$$HC = Ceq \times TS_2 \times (1 - (TS_2 \times t_2^3)/(TS_1 \times t_1^3))/\sqrt{t_2} \text{ (formula 2)}$$

An element symbol described in the formula 1 is a content in mass% of an element corresponding to the element symbol in a sheet thickness 1/4 portion of the base material portion of the first steel sheet, and a symbol $TS_1$ described in the formula 2 is the tensile strength in MPa of the first steel sheet, $t_1$ is a sheet thickness in mm of the first steel sheet, $TS_2$ is the tensile strength in MPa of the second steel sheet, and $t_2$ is a sheet thickness in mm of the second steel sheet.

(7) Preferably, in the method for manufacturing a spot-welded joint according to (6), the Vickers hardness from the surface of the first steel sheet to a depth of 50 $\mu$m is 95% or less of the Vickers hardness at the position of 1/4 of the sheet thickness of the base material portion of the first steel sheet.

(8) Preferably, in the method for manufacturing a spot-welded joint according to (6) or (7), the Vickers hardness from the surface of the first steel sheet to a depth of 100 $\mu$m is 95% or less of the Vickers hardness at the position of 1/4 of the sheet thickness of the base material portion of the first steel sheet.

(9) Preferably, in the method for manufacturing a spot-welded joint according to any one of (6) to (8), the Vickers hardness from the surface of the first steel sheet to a depth of 200 $\mu$m is 95% or less of the Vickers hardness at the position of 1/4 of the sheet thickness of the base material portion of the first steel sheet.

<Supplement>

(1) A spot-welded joint according to another embodiment of the present disclosure is a spot-welded joint including: two steel sheets including one or more high strength steel sheets having a tensile strength of 1300 MPa or more; and a spot-welding portion that has a nugget and a pressure-contact surface around the nugget and that joins the two steel sheets, in which in a case where tensile strengths of the two steel sheets are different, the steel sheet having a higher tensile strength is defined as a first steel sheet, and the steel sheet having a lower tensile strength is defined as a second steel sheet, and in a case where the tensile strengths of the two steel sheets are the same, the steel sheet having a large thickness is defined as a first steel sheet, and the steel sheet having a small thickness is defined as a second steel sheet, in a base material portion of the first steel sheet, a carbon equivalent Ceq of an inner portion of the sheet thickness represented by a formula 1 below is 0.22% or more, an index HC represented by a formula 2 below is 170 or more, and the Vickers hardness of a surface layer area of the first steel sheet at an outer peripheral side end portion of the pressure-contact surface measured in a cross section passing through the center of the nugget and perpendicular to a surface of the steel sheet is 50 HV or more lower than the Vickers hardness at a sheet thickness 1/4 portion of the first steel sheet.

$$Ceq = C + Si/90 + (Mn + Cr)/100 \text{ (formula 1)}$$

$$HC = Ceq \times TS_2 \times (1 - (TS_2 \times t_2^3)/(TS_1 \times t_1^3))/\sqrt{t_2} \text{ (formula 2)}$$

An element symbol described in the formula 1 is a content in mass% of an element corresponding to the element symbol in the inner portion of the sheet thickness of the base material portion of the first steel sheet, and a symbol $TS_1$ described in the formula 2 is the tensile strength in MPa of the first steel sheet, $t_1$ is a sheet thickness in mm of the first steel sheet, $TS_2$ is the tensile strength in MPa of the second steel sheet, and $t_2$ is a sheet thickness in mm of the second steel sheet.

(2) A spot-welded joint according to another embodiment of the present disclosure is a spot-welded joint including: three or more steel sheets including one or more high strength steel sheets having a tensile strength of 1300 MPa or more; and a spot-welding portion that has a nugget and a pressure-contact surface around the nugget and that joins the three or more steel sheets, in which in at least one of combinations of the high strength steel sheet and the steel sheet in contact with the high strength steel sheet, in a case where tensile strengths of two steel sheets are different, the steel sheet having a higher tensile strength is defined as a first steel sheet, and the steel sheet having a lower tensile strength is defined as a second steel sheet, and in a case where the tensile strengths of the two steel sheets are the same, the steel sheet having a large thickness is defined as a first steel sheet, and the steel sheet having a small thickness is defined as a second steel sheet, in a base material portion of the first steel sheet, a carbon equivalent Ceq of an inner portion of the sheet thickness represented by a formula 1 below is 0.22% or more, an index HC represented by a formula 2 below is 170 or more, and the Vickers hardness of a surface layer area of the first steel sheet at an outer peripheral side end portion of the pressure-contact surface measured in a cross section passing through the center of the nugget and perpendicular to a surface of the steel sheet is 50 HV or more lower than the Vickers hardness at a sheet thickness 1/4 portion of the first steel sheet.

$$Ceq = C + Si/90 + (Mn + Cr)/100 \text{ (formula 1)}$$

$$HC = Ceq \times TS_2 \times (1 - (TS_2 \times t_2^3)/(TS_1 \times t_1^3))/\sqrt{t_2} \text{ (formula 2)}$$

An element symbol described in the formula 1 is a content in mass% of an element corresponding to the element symbol in the inner portion of the sheet thickness of the base material portion of the first steel sheet, and a symbol $TS_1$ described in the formula 2 is the tensile strength in MPa of the first steel sheet, $t_1$ is a sheet thickness in mm of the first steel sheet, $TS_2$ is the tensile strength in MPa of the second steel sheet, and $t_2$ is a sheet thickness in mm of the second steel sheet.

(3) **In** the spot-welded joint according to (2), in at least a combination having a largest index HC among combinations of the high strength steel sheet and the steel sheet in contact with the high strength steel sheet, the carbon equivalent Ceq of the inner portion of the sheet thickness may be 0.22% or more, the index HC may be 170 or more, and the Vickers hardness of the surface layer area of the first steel sheet at the outer peripheral side end portion of the pressure-contact surface may be 50 HV or more lower than the Vickers hardness at the sheet thickness 1/4 portion of the first steel sheet.

(4) In the spot-welded joint according to (2), in all of combinations of the high strength steel sheet and the steel sheet in contact with the high strength steel sheet, the carbon equivalent Ceq of the inner portion of the sheet thickness may be 0.22% or more, the index HC may be 170 or more, and the Vickers hardness of the surface layer area of the first steel sheet at the outer peripheral side end portion of the pressure-contact surface may be 50 HV or more lower than the Vickers hardness at the sheet thickness 1/4 portion of the first steel sheet.

(5) In the spot-welded joint according to any one of (1) to (4), the first steel sheet may have a decarburization layer having a depth of 5 to 200 $\mu$m.

(6) In the spot-welded joint according to any one of (1) to (5), the tensile strength of the first steel sheet may be 1500 MPa or more.

(7) In the spot-welded joint according to any one of (1) to (6), the first steel sheet may be a hot-stamped steel sheet.

(8) A component for a vehicle according to another embodiment of the present disclosure includes the spot-welded joint according to any one of (1) to (7).

(9) A method for manufacturing a spot-welded joint according to another embodiment of the present disclosure is a method for manufacturing a spot-welded joint including: spot-welding two steel sheets including one or more high strength steel sheets having a tensile strength of 1300 MPa or more to form a spot-welding portion that has a nugget and a pressure-contact surface around the nugget and that joins the two steel sheets, in which in a case where tensile strengths of the two steel sheets are different, the steel sheet having a higher tensile strength is defined as a first steel sheet, and the steel sheet having a lower tensile strength is defined as a second steel sheet, and in a case where the tensile strengths of the two steel sheets are the same, the steel sheet having a large thickness is defined as a first steel sheet, and the steel sheet having a small thickness is defined as a second steel sheet, in a base material portion of the first steel sheet, a carbon equivalent Ceq of an inner portion of the sheet thickness represented by a formula 1 below is 0.22% or more, an index HC represented by a formula 2 below is 170 or more, and the Vickers hardness of a surface layer area of the first steel sheet at an outer peripheral side end portion of the pressure-contact surface measured in a cross section passing through the center of the nugget and perpendicular to a surface of the steel sheet is made lower by 50 HV or more than the Vickers hardness at a sheet thickness 1/4 portion of the first steel sheet.

$$Ceq = C + Si/90 + (Mn + Cr)/100 \text{ (formula 1)}$$

$$HC = Ceq \times TS_2 \times (1 - (TS_2 \times t_2^3)/(TS_1 \times t_1^3))/\sqrt{t_2} \text{ (formula 2)}$$

An element symbol described in the formula 1 is a content in mass% of an element corresponding to the element symbol in the inner portion of the sheet thickness of the base material portion of the first steel sheet, and a symbol $TS_1$ described in the formula 2 is the tensile strength in MPa of the first steel sheet, $t_1$ is a sheet thickness in mm of the first steel sheet, $TS_2$ is the tensile strength in MPa of the second steel sheet, and $t_2$ is a sheet thickness in mm of the second steel sheet.

(10) A method for manufacturing a spot-welded joint according to another embodiment of the present disclosure is a method for manufacturing a spot-welded joint including: spot-welding three or more steel sheets including one or more high strength steel sheets having a tensile strength of 1300 MPa or more to form a spot-welding portion that has a nugget and a pressure-contact surface around the nugget and that joins the three or more steel sheets, in which in at least one of combinations of the high strength steel sheet and a steel sheet in contact with the high strength steel sheet, in a case where tensile strengths of two steel sheets are different, the steel sheet having a higher tensile strength is defined as a first steel sheet, and the steel sheet having a lower tensile strength is defined as a second steel sheet, and in a case where the tensile strengths of the two steel sheets are the same, the steel sheet having a large thickness is defined as a first steel sheet, and the steel sheet having a small thickness is defined as a second steel sheet, in a base material portion of the first steel sheet, a carbon equivalent Ceq of an inner portion of the sheet thickness represented by a formula 1 below is 0.22% or more, an index HC represented by a formula 2 below is 170 or more, and the Vickers hardness of a surface layer area of the first steel sheet at an outer peripheral side end portion of the pressure-contact surface measured in a cross section passing through the center of the nugget and perpendicular to a surface of the steel sheet is made lower by 50 HV or more than the Vickers hardness at a sheet thickness 1/4 portion of the first steel sheet.

$$Ceq = C + Si/90 + (Mn + Cr)/100 \text{ (formula 1)}$$

$$HC = Ceq \times TS_2 \times (1 - (TS_2 \times t_2^3)/(TS_1 \times t_1^3))/\sqrt{t_2} \text{ (formula 2)}$$

An element symbol described in the formula 1 is a content in mass% of an element corresponding to the element symbol in the inner portion of the sheet thickness of the base material portion of the first steel sheet, and a symbol $TS_1$ described in the formula 2 is the tensile strength in MPa of the first steel sheet, $t_1$ is a sheet thickness in mm of the first steel sheet, $TS_2$ is the tensile strength in MPa of the second steel sheet, and $t_2$ is a sheet thickness in mm of the second steel sheet.

(11) In the method for manufacturing a spot-welded joint according to (10), in at least a combination having a largest index HC among combinations of the high strength steel sheet and the steel sheet in contact with the high strength steel sheet, the carbon equivalent Ceq of the inner portion of the sheet thickness may be 0.22% or more, the index HC may be 170 or more, and the Vickers hardness of the surface layer area of the first steel sheet at the outer peripheral side end portion of the pressure-contact surface may be made lower by 50 HV or more than the Vickers hardness at the sheet thickness 1/4 portion of the first steel sheet.

(12) In the method for manufacturing a spot-welded joint according to (10), in all of combinations of the high strength steel sheet and the steel sheet in contact with the high strength steel sheet, the carbon equivalent Ceq of the inner portion of the sheet thickness may be 0.22% or more, the index HC may be 170 or more, and the Vickers hardness of the surface layer area of the first steel sheet at the outer peripheral side end portion of the pressure-contact surface may be made lower by 50 HV or more than the Vickers hardness at the sheet thickness 1/4 portion of the first steel sheet.

(13) In the method for manufacturing a spot-welded joint according to any one of (9) to (12), the first steel sheet may have a decarburization layer having a depth of 5 to 200 $\mu$m.

Advantageous Effects of Invention

According to the present disclosure, it is possible to provide a spot-welded joint including a plurality of steel sheets constituted of one or more high strength steel sheets and having different tensile strengths and/or thicknesses, the spot-welded joint being capable of suppressing HAZ cracks in the vicinity of an outer peripheral side end portion of a corona bond area, and a method for manufacturing the spot-welded joint.

Brief Description of Drawings

FIG. 1 is a schematic view of a cross section passing through a center of a nugget and perpendicular to a surface of a steel sheet of a spot-welded joint in which the number of steel sheets is two according to a first embodiment.
FIG. 2 is an enlarged cross-sectional view of a corona bond area of the spot-welded joint according to the first embodiment.
FIG. 3 is a schematic view of a cross section passing through the center of the nugget and being perpendicular to the surface of the steel sheet of a spot-welded joint in which the number of steel sheets is three and the number of high strength steel sheets is one.
FIG. 4 is a schematic view of a cross section passing through the center of the nugget and being perpendicular to the surface of the steel sheet of a spot-welded joint in which the number of steel sheets is three and the number of high strength steel sheets is two.
FIG. 5 is an enlarged cross-sectional view of a corona bond area of a conventional spot-welded joint.

Description of Embodiments

(First embodiment: spot-welded joint)

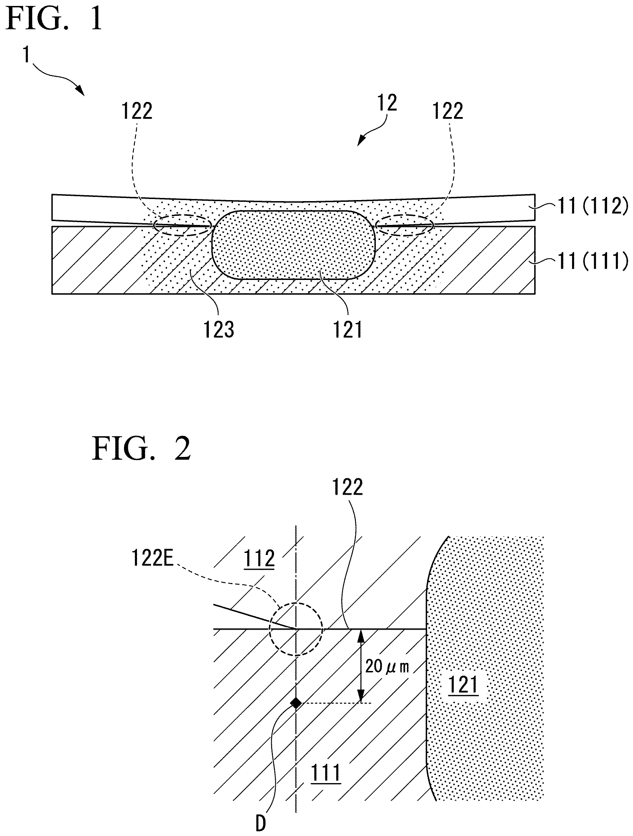

As illustrated in FIG. 1, a spot-welded joint 1 according to a first embodiment of the present disclosure includes a first steel sheet 111, a second steel sheet 112, and a spot-welding portion 12 that joins the first steel sheet 111 and the second steel sheet 112, in which the first steel sheet 111 and the second steel sheet 112 are directly overlapped with each other, the tensile strength of the first steel sheet 111 is 1500 MPa or more, the tensile strength of the second steel sheet 112 is equal to or less than the tensile strength of the first steel sheet 111, the Vickers hardness from a surface of the first steel sheet 111 to a depth of 20 $\mu$m is 95% or less of the Vickers hardness at a position of 1/4 of a sheet thickness of a base material portion of the first steel sheet 111, a carbon equivalent Ceq defined by a formula 1 of the base material portion of the first steel sheet 111 is 0.22% or more, an index HC defined by a formula 2 is 170 or more, the spot-welding portion 12 includes a nugget 121 and a corona bond area 122 that joins the first steel sheet 111 and the second steel sheet 112 around the nugget 121, and the Vickers hardness of 20 $\mu$m on a first steel sheet 111 side at an outer peripheral side end portion 122E of the corona bond area 122 is lower by 50 Hv or more than the Vickers hardness at the position of 1/4 of the sheet thickness of the base material portion of the first steel sheet 111.

$$Ceq = C + Si/90 + (Mn + Cr)/100 \quad (formula\ 1)$$

$$HC = Ceq \times TS_2 \times (1 - (TS_2 \times t_2^3)/(TS_1 \times t_1^3))/\sqrt{t_2} \quad (formula\ 2)$$

An element symbol described in the formula 1 is a content in mass% of an element corresponding to the element symbol in a sheet thickness 1/4 portion of the base material portion of the first steel sheet 111, and a symbol $TS_1$ described in the formula 2 is the tensile strength in MPa of the first steel sheet 111, $t_1$ is a sheet thickness in mm of the first steel sheet 111, $TS_2$ is the tensile strength in MPa of the second steel sheet 112, and $t_2$ is a sheet thickness in mm of the second steel sheet 112.

(Steel sheet 11)

The weld base metal of the spot-welded joint 1 according to the first embodiment is two or more steel sheets 11. Hereinafter, a case where the number of steel sheets 11 is two is first described, and then a case where the number of steel sheets 11 is three or more is be described.
In the spot-welded joint 1 according to the first embodiment, one or both of the two steel sheets 11 are high strength steel sheets. In the present specification, the high strength steel sheet is defined as a steel sheet having a tensile strength of 1300 MPa or more or 1500 MPa or more.

For convenience, the steel sheet 11 having a higher tensile strength among the two steel sheets 11 is defined as a first steel sheet 111, and the other steel sheet 11 is defined as a second steel sheet 112. In the spot-welded joint 1 illustrated in FIG. 1, only the hatched steel sheet 11 first from the bottom is a high strength steel sheet, and the other steel sheets 11 are mild steel sheets. Therefore, the hatched steel sheet 11 is regarded as the first steel sheet 111, and the non-hatched steel sheet 11 is regarded as the second steel sheet 112. If the two steel sheets 11 have the same tensile strength, the steel sheet 11 having a large thickness is defined as the first steel sheet 111 and the steel sheet 11 having a small thickness is defined as the second steel sheet 112. In a case where the sheet thickness and the tensile strength of the two steel sheets are the same, the index HC to be described later is 0, and thus, it is not considered in the spot-welded joint 1 according to the first embodiment.

As illustrated in FIG. 1, in the spot-welded joint 1, the first steel sheet 111 and the second steel sheet 112 are directly overlapped with each other. During spot-welding, the deformation amount of the first steel sheet 111 is smaller than the deformation amount of the second steel sheet 112. Therefore, after the end of the spot-welding, the first steel sheet 111 is subjected to a tensile stress from the second steel sheet 112. This point is described later.

In addition, in the spot-welded joint 1 according to the first embodiment, the Vickers hardness from the surface of the first steel sheet 111 to a depth of 20 $\mu$m is preferably 95% or less of the Vickers hardness at the position of 1/4 of the sheet thickness of the base material portion of the first steel sheet 111. This means that the decarburization layer depth of the first steel sheet 111 is at least 20 $\mu$m. The decarburization layer depth and the operation and effects thereof is described later. The position of 1/4 of the sheet thickness is a position at a depth of $1/4t_1$ from the surface of the first steel sheet 111 when the sheet thickness of the first steel sheet 111 is represented as $t_1$. The position of 1/4 of the sheet thickness is a concept different from that of the sheet thickness 1/4 portion described later.

In the base material portion of the first steel sheet 111, the carbon equivalent Ceq is 0.22% or more. The carbon equivalent is a value calculated by the following formula 1.

$$Ceq = C + Si/90 + (Mn + Cr)/100 \quad \text{(formula 1)}$$

Here, the element symbol described in formula 1 is a content of an element corresponding to the element symbol in mass% in a sheet thickness 1/4 portion of the base material portion of the first steel sheet 111. The base material portion of the first steel sheet 111 is a region of the first steel sheet 111 that is not thermally affected during welding. The sheet thickness 1/4 portion is a region having a depth of $1/8t_1$ or more and $1/4t_1$ or less from the surface of the first steel sheet 111 when the sheet thickness of the first steel sheet 111 is represented as $t_1$. When the sheet thickness of the first steel sheet 111 is represented as $t_1$, the inner portion of the sheet thickness is a range obtained by excluding the depth $t_1/4$ from the surface of the first steel sheet 111, that is, a range of $1/4t_1$ to $3/4t_1$. The carbon equivalent Ceq of the sheet thickness 1/4 portion of the base material portion or the inner portion of the sheet thickness of the first steel sheet 111 can be obtained by measuring the chemical compositions of the sheet thickness 1/4 portion of the base material portion or the inner portion of the sheet thickness of the first steel sheet 111 using a combustion method (infrared absorption method), a spectroscopic analysis method, or the like. The Ceq of the sheet thickness 1/4 portion and the Ceq of the inner portion of the sheet thickness generally coincide with each other.

The carbon equivalent Ceq is an index of hardenability, and it is preferable that the carbon equivalent Ceq is higher because the tensile strength is higher. However, as the carbon equivalent Ceq is higher, the spot-welding portion 12 is more likely to embrittle. Therefore, in the calculation formula of the index HC to be described later, the carbon equivalent Ceq is used as an index of the brittleness of the first steel sheet 111. The carbon equivalent Ceq of the base material portion of the first steel sheet 111 may be 0.25% or more, 0.30% or more, or 0.35% or more. The upper limit value of the carbon equivalent Ceq of the base material portion of the first steel sheet 111 is not particularly limited, but may be, for example, 0.55% or less or 0.50% or less.

The first steel sheet 111 may be a high strength steel sheet of a class higher than 1300 MPa. For example, the tensile strength of the first steel sheet may be 1500 MPa class or more, or 1800 MPa class or more. The tensile strength of the first steel sheet 111 is, for example, 1500 MPa or more, or 1800 MPa or more. Here, "1500 MPa class (1800 MPa class)" of the hot-stamped steel sheet means that a tensile strength of 1500 MPa or more (1800 MPa or more) is obtained if appropriate quenching is performed, and that the tensile strength of less than 1500 MPa (less than 1800 MPa) can be obtained depending on quenching conditions.

Other aspects of the steel sheet 11 are not particularly limited as long as one or more of the two steel sheets 11 are high strength steel sheets. For example, the components and the metallographic structure of the steel sheet 11 are not particularly limited, and a preferred mode for securing a tensile strength of 1300 MPa class or more can be selected as necessary.

The steel sheet 11 is preferably a hot-stamped steel sheet, that is, a steel sheet (steel member) manufactured by hot stamping. The hot-stamped steel sheet includes a martensite structure generated by quenching. Therefore, the base material portion of the steel sheet 11, particularly the base material portion of the first steel sheet 111 may include a martensite structure. The martensite structure may be either fresh martensite or tempered martensite. The amount of the martensite structure is not particularly limited, but for example, the amount of martensite in a sheet thickness 1/4 portion of the base material portion of the first steel sheet 111 is preferably in a range of 80% to 100%, and more preferably 90 to 100%. In addition, a steel sheet before hot stamping (steel sheet for hot stamping) may be used as the steel sheet 11.

The "steel sheet" in the spot-welded joint 1 according to the first embodiment is a concept including not only steel having a sheet shape as a whole but also steel having a sheet shape only in part, such as a member having a flange section.

The steel sheet 11 may have a coated layer on the surface thereof. Examples of the coated layer include hot-dip galvanizing, alloying hot-dip galvanizing, and aluminum coating. This makes it possible to enhance corrosion resistance of the spot-welded joint 1.

The thickness of the steel sheet 11 is also not particularly limited. For example, when the spot-welded joint 1 is used as a component for a vehicle, the thickness $t_1$ of the first steel sheet 111 may be 1.0 to 2.6 mm, and the thickness $t_2$ of the second steel sheet 112 may be 0.5 to 2.3 mm. The thickness $t_1$ of the first steel sheet 111 and the thickness $t_2$ of the first steel sheet 111 mean thicknesses in the spot-welding portion 12. When a steel sheet having a non-constant thickness such as a tailored blank is used as the first steel sheet, the thickness measured at the welded portion is regarded as $t_1$ or $t_2$.

(Spot-welding portion 12)

In the spot-welded joint 1 according to the first embodiment, the two steel sheets 11 including the high strength steel sheets are joined by the spot-welding portion 12. As illustrated in FIGS. 1 and 2, the spot-welding portion 12 includes a nugget 121 which is a melted and solidified portion and a corona bond area 122. The corona bond area 122 is formed around the nugget 121. The corona bond area 122 joins the first steel sheet 111 and the second steel sheet 112 around the nugget 121. The corona bond area 122 is a region where melting and solidification do not occur but two steel sheets 11 are solid-phase joined, and is also referred to as a pressure-contact surface or a corona bond. In addition, the HAZ 123 is formed around the nugget 121. The HAZ 123 is a region in which melting and solidification does not occur, but the metallographic structure, the metallurgical properties, the mechanical properties, and the like are changed by the influence of welding heat.

The spot-welded joint 1 may have a plurality of spot-welding portions 12. A joint in which at least one of the plurality of spot-welding portions 12 satisfies the requirements of the spot-welded joint 1 according to the first embodiment is regarded as the spot-welded joint 1 according to the first embodiment. The spot-welded joint 1 may include joining means such as a laser weld, an adhesive portion, and a rivet joint portion in addition to the spot-welding portion 12.

(Index HC)

In the spot-welded joint 1 according to the first embodiment, an index HC defined by the following formula 2 is 170 or more.

$$HC = Ceq \times TS_2 \times (1 - (TS_2 \times t_2^3)/(TS_1 \times t_1^3))/\sqrt{t_2} \quad \text{(formula 2)}$$

Here, the meanings of the symbols described in formula 2 are as follows.

· $TS_1$: Tensile strength in MPa of first steel sheet 111
· $t_1$: Sheet thickness in mm of the first steel sheet 111
· $TS_2$: Tensile strength in MPa of the second steel sheet 112
· $t_2$: Sheet thickness in mm of second steel sheet 112
· Ceq: Carbon equivalent of the first steel sheet 111 calculated by the formula 1 above

HC is an index of the likelihood of occurrence of HAZ cracks of the first steel sheet in the vicinity of the outer peripheral side end portion 122E of the corona bond area. The index HC is described below.

The present inventors have found that when a sheet set constituted of a plurality of steel sheets 11 including one or more high strength steel sheets and having different tensile strengths and/or thicknesses of the steel sheets 11 is spot-welded, a crack C of a unique form occurs. Specifically, as shown in FIG. 5, in the HAZ 123 in the vicinity of the outer peripheral side end portion 122E of the corona bond area 122, a crack C progressing in the thickness direction of the steel sheet 11 was confirmed. When the spot-welding portion 12 is viewed in a plane view, the corona bond area 122 is formed in a ring shape around the nugget 121. Therefore, the outer peripheral side end portion 122E of the corona bond area 122 can be visually recognized as an end portion on the opposite side of the nugget 121 in the cross section of the nugget 121.

**In** view of the above circumstances, as a result of performing various FEM analysis by the present inventors, the following matters have become clear.

(1) After the two steel sheets 11 having the same strength and the same sheet thickness are spot-welded, stress the cause the nugget 121 to peel off is generated at the mating surfaces of the two steel sheets 11.
(2) After spot-welding the two steel sheets 11 having different strengths and thicknesses, a high stress is also generated at the outer peripheral side end portion 122E of the corona bond area 122 of the steel sheet 11 that is less likely to be deformed among the two steel sheets 11.

(2) is described in detail below. The normal spot-welding is often performed in a state where there is a slight gap between the steel sheets 11. This gap is referred to as a sheet gap. When spot-welding is performed in a state where there is a sheet gap, the steel sheet 11 is deformed by the pressing force of the electrode. Here, in a case where the strength and the thickness of the two steel sheets 11 are different, the steel sheet 11 having low strength and/or a small sheet thickness, that is, the second steel sheet 112 is greatly deformed by the pressing force of the electrode. Then, when the spot-welding is completed and the electrode is opened, the deformed second steel sheet 112 tries to return to the original shape, and a tensile stress is applied to the first steel sheet 111. As a result, tensile stress concentrates on the outer peripheral side end portion 122E of the corona bond area 122 of the first steel sheet 111. Then, the crack C occurs in the HAZ 123 in the vicinity of the outer peripheral side end portion 122E of the corona bond area 122 of the first steel sheet 111.

The present inventors first specified a condition under which stress is likely to occur at the outer peripheral side end portion 122E of the corona bond area 122, and then prevented cracks in the vicinity of the outer peripheral side end portion 122E of the corona bond area 122. As a result, the present inventors have found that the conditions under which stress is likely to occur at the outer peripheral side end portion 122E of the corona bond area 122 are as follows.

· The larger the strength difference and the thickness difference between the first steel sheet 111 and the second steel sheet 112, the larger the deformation amount of the second steel sheet 112.
· The larger the tensile strength of the second steel sheet 112, the larger the stress applied to the first steel sheet 111 by the second steel sheet 112.
· The smaller the nugget diameter, the larger the stress per unit area.

Therefore, the present inventors defined the index HC of the cracks susceptibility of the HAZ 123 of the first steel sheet 111 in the vicinity of the outer peripheral side end portion 122E of the corona bond area 122 in consideration of these conditions.

"$(1 - (TS_2 \times t_2^3)/(TS_1 \times t_1^3))$" included in formula 2 defining the index HC is an index value of the strength/sheet thickness balance of the first steel sheet 111 and the second steel sheet 112. The larger the index value, the larger the deformation amount of the second steel sheet 112 at the time of spot-welding. The smaller the tensile strength $TS_2$ of the second steel sheet 112 with respect to the tensile strength $TS_1$ of the first steel sheet 111, the larger the index value. In addition, the smaller the thickness $t_2$ of the second steel sheet 112 with respect to the thickness $t_1$ of the first steel sheet 111, the larger the index value.

The product of "$TS_2$" and "$(1 - (TS_2 \times t_2^3)/(TS_1 \times t_1^3))$" included in formula 2 is the product of the index value of the deformation amount of the second steel sheet 112 at the time of spot-welding and the tensile strength of the second steel sheet 112. The product of "$TS_2$" and "$(1 - (TS_2 \times t_2^3)/(TS_1 \times t_1^3))$" is an index value of the tensile strength given to the first steel sheet 111 by the second steel sheet 112 after completion of spot-welding. "Ceq" included in formula 2 is an index value of the brittleness of the first steel sheet 111. "$\sqrt{t_2}$" included in formula 2, that is, $t_2^{0.5}$ is an index value of the nugget diameter.

When the index HC is 170 or more, the HAZ 123 of the first steel sheet 111 is likely to crack in the vicinity of the outer peripheral side end portion 122E of the corona bond area 122. On the other hand, a spot-welded joint 1 having an index HC of 170 or more is required for various mechanical structural parts. For example, in a manufacture site of a component for a vehicle, it is extremely frequent to use a high-strength and thick steel sheet as a frame member, use a low-strength and thin steel sheet as an exterior member, and spot-weld them. Therefore, by setting the index HC of the spot-welded joint 1 to 170 or more, the application range of the spot-welded joint 1 can be expanded. The index HC may be 180 or more, 190 or more, or 200 or more.

(The difference ΔHv between the Vickers hardness of 20 μm on the first steel sheet 111 side at the outer peripheral side end portion 122E of the corona bond area 122 and the Vickers hardness at the position of 1/4 of the sheet thickness of the base material portion of the first steel sheet 111)
When the index HC is 170 or more, as shown in FIG. 5, the HAZ 123 of the first steel sheet 111 in the vicinity of the outer peripheral side end portion 122E of the corona bond area 122 is the most easily cracked region. Therefore, in the spot-welded joint 1 according to the first embodiment, the Vickers hardness of 20 μm on the first steel sheet 111 side at the outer peripheral side end portion 122E of the corona bond area 122 is made lower by 50 Hv or more than the Vickers hardness at the position of 1/4 of the sheet thickness of the first steel sheet 111. The Vickers hardness (that is, the Vickers hardness of the surface layer area of the first steel sheet 111 at the outer peripheral side end portion 122E of the corona bond area 122) of 20 μm on the first steel sheet 111 side at the outer peripheral side end portion 122E of the corona bond area 122 is the Vickers hardness measured at a portion D at a depth of 20 μm from the outer peripheral side end portion 122E of the corona bond area 122 in the first steel sheet 111 as illustrated in FIG. 2.

By setting ΔHv to 50 Hv or more, HAZ cracks of the first steel sheet 111 can be extremely effectively prevented. The difference ΔHv between the Vickers hardness of 20 μm on the first steel sheet 111 side at the outer peripheral side end portion 122E of the pressure-contact surface 122 and the Vickers hardness at the position of 1/4 of the sheet thickness of the first steel sheet 111 may be 60 Hv or more, 70 Hv or more, or 80 Hv or more.

The Vickers hardness (that is, the Vickers hardness of the surface layer area of the first steel sheet 111 at the outer peripheral side end portion 122E of the corona bond area 122) of 20 μm on the first steel sheet 111 side at the outer peripheral side end portion 122E of the corona bond area 122 is measured in accordance with JIS Z 2244:2009. The measurement surface is a cross section passing through the center of the nugget 121 and perpendicular to the surface of the steel sheet 11. As illustrated in FIG. 2, the measurement position is a position on a line passing through the outer peripheral side end portion 122E of the corona bond area 122 and substantially perpendicular to the corona bond area 122, in an inner portion the first steel sheet 111, and at a depth of 20 μm from the corona bond area 122. The position of the outer peripheral side end portion 122E of the corona bond area 122 is specified by observing the measurement surface with a microscope. In the normal spot-welded joint 1, a slight gap is generated between the steel sheets 11 due to sheet separation. The pressure-contact end portion can also be visually recognized on the measurement surface.

The Vickers hardness at the position of 1/4 of the sheet thickness of the first steel sheet 111 is also measured in accordance with JIS Z 2244:2009. The measurement surface is a cross section passing through the center of the nugget 121 and perpendicular to the surface of the steel sheet 11. The measurement position is a position at a depth of 1/4 of the thickness $t_1$ of the first steel sheet 111 from the surface of the first steel sheet 111. The measurement position is an outer portion the nugget 121 and the HAZ 123. Note that the HAZ softened part outside the HAZ hardened part may not be clearly visible even when etched. However, the width of the HAZ softened part is about 2 to 3 mm. Therefore, if the Vickers hardness at the position of 1/4 of the sheet thickness is measured at a position sufficiently away (for example, 5 mm or more) from the outer edge of the HAZ 123 visually recognized by etching, the hardness of the base material portion can be reliably measured.

In measuring the Vickers hardness of the surface layer area and the Vickers hardness at the position of 1/4 of the sheet thickness, the test force is set to 10 gf. As a result, both the measured values can be compared.

Means for setting ΔHv to 50 Hv or more is not particularly limited. For example, ΔHv can be set to 50 Hv or more by subjecting the first steel sheet 111 to the surface layer decarburization treatment and then performing spot-welding. Therefore, in the spot-welded joint 1 according to the first embodiment, the first steel sheet 111 may have a decarburization layer having a depth of 5 to 200 μm. The decarburization layer depth of the first steel sheet 111 may be 10 μm or more, 20 μm or more, or 50 μm or more. The decarburization layer depth of the first steel sheet 111 may be 190 μm or less, 180 μm or less, or 150 μm or less.

The presence or absence of the decarburization layer of the first steel sheet 111 can be easily determined by locally analyzing the carbon concentrations of the surface layer and the inner portion of the first steel sheet 111 in the cross section of the spot-welding portion 12 formed perpendicularly to the surface of the steel sheet 11 and comparing the two.

The depth of the decarburization layer of the first steel sheet 111 is specified based on the Vickers hardness distribution in the depth direction of the first steel sheet 111 for convenience of measurement. When the Vickers hardness is measured, the test force is set to 10 gf. Vickers hardness measurement in accordance with JIS Z 2244:2009 is continuously performed from the surface toward the inner portion of the first steel sheet 111. When the first steel sheet 111 has a decarburization layer, the deeper the measurement point, the greater the Vickers hardness. In the surface layer of the first steel sheet 111, a region where the Vickers hardness is 95% or less of the Vickers hardness at the position of 1/4 of the sheet thickness of the first steel sheet 111 is regarded as a decarburization layer, and the thickness of this region is regarded as a decarburization layer depth. For example, when the Vickers hardness from the surface of the first steel sheet 111 to a depth of 20 μm is 95% or less of the Vickers hardness at the position of 1/4 of the sheet thickness of the base material portion of the first steel sheet 111, the decarburization layer depth of the first steel sheet 111 is at least 20 μm. In this case, ΔHv can be set to 50 Hv or more.

The decarburization layer may be provided on both surfaces of the first steel sheet 111, or may be provided only on the side of the surface of the first steel sheet 111 that is in contact with the second steel sheet 112.

The decarburization layer is constituted of a microstructure containing at least one of ferrite, bainite, and martensite. The closer to the surface of the steel sheet, the lower the amount of carbon, and thus the larger the amount of ferrite, which is a low-carbon microstructure. However, when the layer constituted of the ferrite-based microstructure is excessively thick, the strength of the base metal decreases. Therefore, the thickness of the layer constituted of the ferrite-based microstructure included in the decarburization layer on the surface of the first steel sheet 111 is preferably less than 5 μm. More preferably, the thickness of the layer constituted of the ferrite-based microstructure is 4.5 μm or less, 4.0 μm or less, or 3.5 μm or less. The ferrite-based microstructure is defined as a microstructure composed of ferrite with an area fraction of 70% or more when the cross section is observed. In the present embodiment, the thickness of the decarburization layer and the thickness of the layer constituted of the ferrite-based microstructure are different concepts. The thickness of the decarburization layer is specified by hardness measurement as described above, but the thickness of the layer constituted of a ferrite-based microstructure is measured by microstructure observation described below.

The microstructure observation is performed with a scanning electron microscope. Prior to the observation, a sample for microstructure observation is wet-polished with emery paper and polished with diamond abrasive grains having an average particle size of 1 $\mu$m, an observed section is finished to a mirror surface, and then the microstructure is etched with a 3% nitric acid alcohol solution. The observation magnification is set to 3000 x, and 10 images of a field of view of 50 $\mu$m $\times$ 50 $\mu$m are randomly captured. The observed visual field of view includes a region from the surface of the steel sheet to a depth of 5 $\mu$m. The microstructure proportion is determined by the following procedure. For the obtained microstructure image, lattice-like imaginary lines arranged at intervals of 0.5 $\mu$m in length and 0.5 $\mu$m in width are arranged within a range from the surface of the steel sheet to a depth of 5 $\mu$m. Then, the area fraction of ferrite in inner portion of each lattice surrounded by the imaginary line is measured. Ferrite is a massive crystal grain, and does not contain an iron-based carbide having a major axis of 100 nm or more in the inner portion. The value obtained by dividing the area of ferrite by the area of the lattice (0.25 $\mu$m$^2$) is the area fraction of ferrite in one lattice. As a result, a lattice having a ferrite area fraction of 70% or more and a lattice having a ferrite area fraction of less than 70% are specified. In the decarburization layer, the ferrite area fraction increases as it is closer to the surface of the steel sheet. According to the above-described procedure, it is possible to specify a layer including a lattice having a ferrite area fraction of 70% or more. The thickness of this layer is regarded as the thickness of a layer constituted of a ferrite-based microstructure.

On the other hand, in order to set $\Delta$Hv to 50 Hv or more, means other than the surface layer decarburization treatment can also be used. For example, even when only the surface layer of the first steel sheet 111 is softened by controlling the number density of precipitates, $\Delta$Hv can be set to 50 Hv or more. In addition, $\Delta$Hv can be set to 50 Hv or more by forming the first steel sheet 111 as a clad steel sheet in which mild steel and high strength steel are combined.

(Spot-welded joint 1 having three or more steel sheets 11)

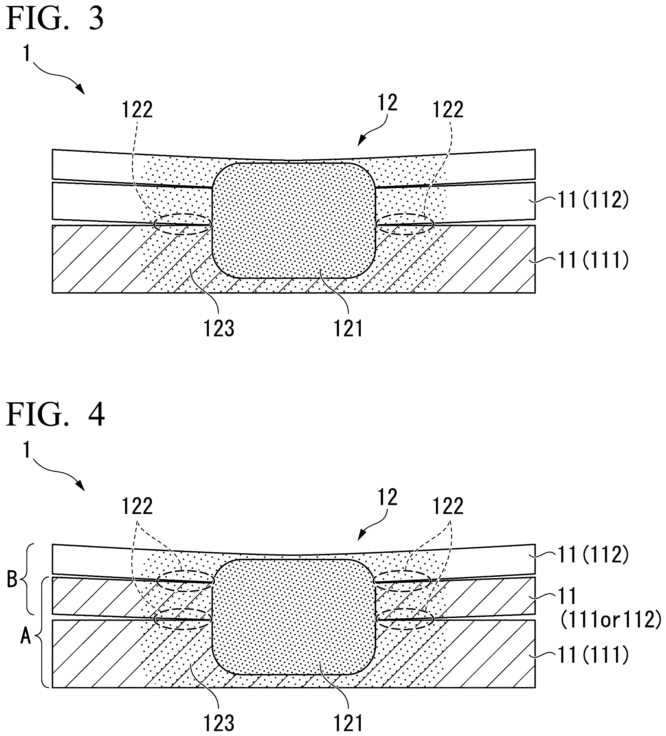

Next, spot-welded joint 1 in which the number of steel sheets 11 is three or more is described.
The spot-welded joint 1 in which the number of steel sheets 11 is two has been described above. On the other hand, as illustrated in FIG. 3 or 4, the spot-welded joint 1 can include three or more steel sheets 11 including one or more high strength steel sheets having a tensile strength of 1300 MPa or more or 1500 MPa or more, and a spot-welding portion 12 joining the three or more steel sheets 11. In the spot-welded joint 1, a high strength steel sheet is most concerned about the occurrence of cracks. Therefore, measures against cracks needs to be taken in a combination of the high strength steel sheet and the steel sheet 11 in contact with the high strength steel sheet. On the other hand, in the combination of the steel sheets 11 that are not high strength steel sheets, the measures against cracks are not essential.
For example, in the spot-welded joint 1 illustrated in FIG. 3, only the hatched steel sheet 11 first from the bottom is a high strength steel sheet, and the other steel sheets 11 are mild steel sheets. In addition, in the spot-welded joint 1 of FIG. 3, the thickness of the steel sheet 11 is larger as it is disposed below. In this case, the combination of the steel sheet 11 first from the bottom and the steel sheet 11 second from the bottom corresponds to the "combination of high strength steel sheet and steel sheet in contact therewith". For this combination, it is necessary to apply the same constitution as the spot-welded joint 1 in which the number of steel sheets 11 is two. At this time, the steel sheet 11 first from the bottom is regarded as the first steel sheet 111. On the other hand, the steel sheet 11 third from the bottom and the steel sheet 11 second from the bottom are both mild steel sheets. It is not necessary to apply the same constitution as the spot-welded joint 1 in which the number of steel sheets 11 is two to the combination of the steel sheet 11 third from the bottom and the steel sheet 11 second from the bottom.
In spot-welded joint 1 shown in FIG. 3, there is only one "combination of high strength steel sheet and steel sheet in contact therewith". On the other hand, there may be two or more "combination of high strength steel sheet and steel sheet in contact therewith". For example, when the spot-welded joint 1 is constituted of two high strength steel sheets and one mild steel sheet, or three high strength steel sheets, there are two "combination of high strength steel sheet and steel sheet in contact therewith". In such a case, the same constitution as the spot-welded joint 1 in which the number of steel sheets 11 is two may be applied to at least one of the plurality of "combination of high strength steel sheet and steel sheet in contact therewith". As a result, an effect of suppressing HAZ cracks in the vicinity of the outer peripheral side end portion of the corona bond area can be obtained.
More preferably, the same constitution as the spot-welded joint 1 in which the number of steel sheets 11 is two is applied to at least the combination in which the index HC is the largest among the plurality of "combination of high strength steel sheet and steel sheet in contact therewith". The combination having the largest index HC is a combination having the highest risk of cracks. Therefore, it is more preferable to take the measures against cracks for the combination in which the index HC is the largest. More preferably, the same constitution as the spot-welded joint 1 in which the number of steel sheets 11 is two is applied to all of the plurality of "combination of high strength steel sheet and steel sheet in contact therewith".

For example, in the spot-welded joint 1 illustrated in FIG. 4, the steel sheet 11 first from the bottom and the hatched steel sheet 11 second from the bottom are high strength steel sheets having the same strength, and the steel sheet 11 third from the bottom is a mild steel sheet. In addition, in the spot-welded joint 1 of FIG. 4, the thickness of the steel sheet 11 is larger as it is disposed below. In this case, each of the combination A of the steel sheet 11 first from the bottom and the steel sheet 11 second from the bottom and the combination B of the steel sheet 11 second from the bottom and the steel sheet 11 third from the bottom corresponds to the "combination of high strength steel sheet and steel sheet in contact therewith".

The same constitution to that of the spot-welded joint 1 in which the number of steel sheets 11 is two may be applied to at least one of the combination A and the combination B. On the other hand, the combination A has a larger index HC, and is more likely to cause HAZ cracks among the combination A and the combination B. Therefore, it is preferable to apply the same constitution as the spot-welded joint 1 in which the number of steel sheets 11 is two to at least the combination A among the combination A and the combination B. More preferably, the same constitution as the spot-welded joint 1 in which the number of steel sheets 11 is two is preferably applied to both the combination A and the combination B. The steel sheet 11 second from the bottom is considered as the second steel sheet 112 in combination with the steel sheet 11 first from the bottom and as the first steel sheet 111 in combination with the steel sheet 11 third from the bottom.

Except for the above points, the spot-welded joint 1 in which the number of steel sheets 11 is three or more has the same constitution as the spot-welded joint 1 in which the number of steel sheets 11 is two. The preferable aspect of the spot-welded joint 1 in which the number of the steel sheets 11 is two can also be applied to the spot-welded joint 1 in which the number of the steel sheets 11 is three or more.

(Suitable depth of decarburization layer)

The Vickers hardness from the surface of the first steel sheet 111 to a depth of 50 $\mu$m is preferably 95% or less of the Vickers hardness at the position of 1/4 of the sheet thickness of the base material portion of the first steel sheet 111. In other words, the decarburization layer depth of the first steel sheet 111 is preferably 50 $\mu$m or more. In this case, the Vickers hardness of 50 $\mu$m on the first steel sheet side at the outer peripheral side end portion of the corona bond area can be made lower by 50 Hv or more than the Vickers hardness at the position of 1/4 of the sheet thickness of the base material portion of the first steel sheet. In addition, the Vickers hardness from the surface of the first steel sheet 111 to a depth of 100 $\mu$m is preferably 95% or less of the Vickers hardness at the position of 1/4 of the sheet thickness of the base material portion of the first steel sheet 111. In other words, the decarburization layer depth of the first steel sheet 111 is preferably 100 $\mu$m or more. In this case, the Vickers hardness of 100 $\mu$m on the first steel sheet side at the outer peripheral side end portion of the corona bond area can be made lower by 50 Hv or more than the Vickers hardness at the position of 1/4 of the sheet thickness of the base material portion of the first steel sheet. In addition, the Vickers hardness from the surface of the first steel sheet 111 to a depth of 200 $\mu$m is preferably 95% or less of the Vickers hardness at the position of 1/4 of the sheet thickness of the base material portion of the first steel sheet 111. In other words, the decarburization layer depth of the first steel sheet 111 is preferably 200 $\mu$m or more. In this case, the Vickers hardness of 200 $\mu$m on the first steel sheet side at the outer peripheral side end portion of the corona bond area can be made lower by 50 Hv or more than the Vickers hardness at the position of 1/4 of the sheet thickness of the base material portion of the first steel sheet. This makes it possible to more effectively prevent HAZ cracks of the first steel sheet 111.

The Vickers hardness of X $\mu$m (X is any number) on the first steel sheet side at the outer peripheral side end portion of the corona bond area is the Vickers hardness measured at a portion of the first steel sheet 111 at a depth of X $\mu$m from the outer peripheral side end portion 122E of the corona bond area 122.

The Vickers hardness of X $\mu$m (X is any number) on the first steel sheet 111 side or the Vickers hardness of 100 $\mu$m on the first steel sheet 111 side of the outer peripheral side end portion 122E of the corona bond area 122 is measured in accordance with JIS Z 2244:2009. The measurement surface is a cross section passing through the center of the nugget 121 and perpendicular to the surface of the steel sheet 11. The measurement position is a position on a line passing through the outer peripheral side end portion 122E of the corona bond area 122 and substantially perpendicular to the corona bond area 122, in an inner portion the first steel sheet 111, and at a depth of X $\mu$m from the corona bond area 122. The method for determining the test force at the time of measuring the Vickers hardness is in accordance with the method for measuring the Vickers hardness of 20 $\mu$m on the first steel sheet 111 side at the outer peripheral side end portion 122E of the corona bond area 122.

(Second embodiment: component for vehicle)

A component for a vehicle according to a second embodiment of the present disclosure includes the spot-welded joint 1 according to the first embodiment. The component for a vehicle is often manufactured by joining a thick high strength steel sheet and a thin mild steel, but according to the component for a vehicle according to the second embodiment, it is possible to eliminate HAZ cracks in the vicinity of the outer peripheral side end portion 122E of the corona bond area 122.

(Third embodiment: method for manufacturing spot-welded joint 1)

A method for manufacturing a spot-welded joint 1 according to a third embodiment of the present disclosure is a method for manufacturing a spot-welded joint 1 having two or more steel sheets 11. Specifically, the method for manufacturing the spot-welded joint 1 according to the third embodiment includes: overlapping the first steel sheet 111 and the second steel sheet 112; and spot-welding the first steel sheet 111 and the second steel sheet 112, in which the tensile strength of the first steel sheet 111 is 1500 MPa or more, the tensile strength of the second steel sheet 112 is equal to or less than the tensile strength of the first steel sheet 111, the Vickers hardness from a surface of the first steel sheet 111 to a depth of 20 $\mu$m is 95% or less of the Vickers hardness at a position of 1/4 of a sheet thickness of a base material portion of the first steel sheet 111, a carbon equivalent Ceq defined by the formula 1 of the base material portion of the first steel sheet 111 is 0.22% or more, and an index HC defined by the formula 2 is 170 or more.

$$Ceq = C + Si/90 + (Mn + Cr)/100 \ (formula\ 1)$$

$$HC = Ceq \times TS_2 \times (1 - (TS_2 \times t_2^3)/(TS_1 \times t_1^3))/\sqrt{t_2} \ (formula\ 2)$$

An element symbol described in the formula 1 is a content in mass% of an element corresponding to the element symbol in a sheet thickness 1/4 portion of the base material portion of the first steel sheet 111, and a symbol $TS_1$ described in the formula 2 is the tensile strength in MPa of the first steel sheet 111, $t_1$ is a sheet thickness in mm of the first steel sheet 111, $TS_2$ is the tensile strength in MPa of the second steel sheet 112, and $t_2$ is a sheet thickness in mm of the second steel sheet 112. As a result, it is possible to easily obtain the spot-welded joint 1 in which the HAZ cracks in the vicinity of the outer peripheral side end portion 122E of the corona bond area 122 is eliminated. Preferred upper and lower limit values of numerical values such as carbon equivalents are in accordance with those of the spot-welded joint 1 according to the first embodiment.

Means for setting the difference $\Delta Hv$ between the Vickers hardness of 20 $\mu$m on the first steel sheet side at the outer peripheral side end portion 122E of the corona bond area 122 and the Vickers hardness at the position of 1/4 of the sheet thickness of the first steel sheet 111 to 50 Hv or more is not particularly limited. For example, the first steel sheet 111 to be subjected to spot-welding may have a decarburization layer having a depth of 5 to 200 $\mu$m. Alternatively, the Vickers hardness from the surface of the first steel sheet 111 to a depth of 20 $\mu$m to be subjected to spot-welding may be 95% or less of the Vickers hardness at the position of 1/4 of the sheet thickness of the base material portion of the first steel sheet 111. As a result, $\Delta Hv$ can be set to 50 Hv or more. The decarburization layer depth measurement method and the preferred decarburization layer depth are similar to those of the spot-welded joint 1 according to the first embodiment.

Similarly to the spot-welded joint 1 according to the first embodiment, in the method for manufacturing the spot-welded joint 1 according to the third embodiment, the number of steel sheets 11 may be two or three or more. As described with respect to the spot-welded joint 1 according to the first embodiment, when the number of steel sheets 11 is three or more, it is necessary to take the measures against cracks in a combination of the high strength steel sheets and the steel sheets 11 in contact with the high strength steel sheets. On the other hand, in a combination of the steel sheets 11 that are not high strength steel sheets, the measures against cracks are not essential.

Similarly to the spot-welded joint according to the first embodiment, in the method for manufacturing a spot-welded joint according to the third embodiment, the Vickers hardness from the surface of the first steel sheet 111 to a depth of 50 $\mu$m is preferably 95% or less of the Vickers hardness at the position of 1/4 of the sheet thickness of the base material portion of the first steel sheet 111. More preferably, the Vickers hardness from the surface of the first steel sheet 111 to a depth of 100 $\mu$m is 95% or less of the Vickers hardness at the position of 1/4 of the sheet thickness of the base material portion of the first steel sheet 111. More preferably, the Vickers hardness from the surface of the first steel sheet 111 to a depth of 200 $\mu$m is 95% or less of the Vickers hardness at the position of 1/4 of the sheet thickness of the base material portion of the first steel sheet 111. This makes it possible to more effectively prevent HAZ cracks of the first steel sheet 111.

Examples

The effect of one aspect of the present disclosure is described more specifically with reference to examples. However, the conditions in Examples are merely one condition example adopted to confirm the operability and effects of the present disclosure. The present disclosure is not limited to this one condition example. The present disclosure can adopt various conditions as long as the object of the present disclosure is achieved without departing from the gist of the present disclosure.

Each type of sheet set constituted of a first steel sheet and a second steel sheet shown in Table 1 was coated with oil, and then spot-welding was performed. During spot-welding, a sheet gap of 1.5 mm (shim sheet interval of 40 mm) was provided between the steel sheets. The electrode was a dome radius-type chromium copper electrode having a tip diameter of $\Phi$ 6 mm and R 40. The welding conditions were an applied pressure of 600 kgf, an energization time of 0.2 seconds, and a retention time of 1.0 seconds. The welding current was varied by 0.3 kA in the range of 4.5 to 9.0 kA, whereby nuggets of various sizes were manufactured in each condition.

After welding, the spot-welded joint was stored at room temperature for 48 hours or more. Thereafter, the cross section of the spot-welding portion was observed, and the presence or absence of HAZ cracks in the vicinity of the outer peripheral side end portion of the corona bond area was examined. In any of the examples, the larger the nugget diameter, the more the cracks were suppressed. In other words, the smaller the nugget diameter, the more likely it was to crack. Therefore, the nugget diameter $4\sqrt{t}$ was adopted as a criterion. t is the thickness of the thinner one of the first steel sheet and the second steel sheet. An example in which cracks did not occur when the nugget diameter was about $4\sqrt{t}$ was described as "Pass" in the "cracks determination" column. For other examples, "Fail" is described in the "cracks determination" column. Ceq, $\Delta$Hv and decarburization layer depth of the first steel sheet were measured by the method described above. In the measurement of the Vickers hardness, the test force was set to 10 gf. In the example in which the decarburization layer was not provided in the first steel sheet, the decarburization layer depth was described as "-". In these examples, since $\Delta$Hv was all 30 Hv or less, it was described as "-" in the table. In all Examples having a decarburization layer, the thickness of the ferrite-based layer was less than 5.0 $\mu$m.

[Table 1]

| | | First steel sheet | | | | | | Second steel sheet | | Index HC | Cracks determination |
|---|---|---|---|---|---|---|---|---|---|---|---|
| | | Strength (MPa) | Sheet thickness (mm) | Ceq | ΔHV | Decarburization layer depth (μm) | Modification method | Strength (MPa) | Sheet thickness (mm) | | |
| Comparative Example | 1 | 1500 | 1.6 | 0.23 | - | - | - | 1500 | 1.6 | 0 | Pass |
| Comparative Example | 2 | 1500 | 1.8 | 0.23 | - | - | - | 270 | 1.0 | 59 | Pass |
| Comparative Example | 3 | 1500 | 1.8 | 0.23 | - | - | - | 590 | 1.0 | 124 | Pass |
| Comparative Example | 4 | 1500 | 1.8 | 0.23 | - | - | - | 590 | 0.6 | 169 | Pass |
| Comparative Example | 5 | 1500 | 2.0 | 0.23 | - | - | - | 980 | 1.0 | 203 | Fail |
| Comparative Example | 6 | 1500 | 1.8 | 0.23 | - | - | - | 1180 | 1.0 | 230 | Fail |
| Comparative Example | 7 | 1500 | 1.8 | 0.23 | - | - | - | 980 | 0.8 | 233 | Fail |
| Comparative Example | 8 | 1500 | 1.8 | 0.23 | - | - | - | 1180 | 0.8 | 277 | Fail |
| Comparative Example | 9 | 1500 | 1.8 | 0.23 | - | - | - | 1500 | 1.0 | 280 | Fail |
| Comparative Example | 10 | 1500 | 1.6 | 0.23 | - | - | - | 1500 | 0.8 | 331 | Fail |
| Comparative Example | 11 | 1500 | 1.8 | 0.23 | - | - | - | 1500 | 0.8 | 345 | Fail |
| Comparative Example | 12 | 1500 | 2.0 | 0.23 | - | - | - | 1500 | 0.8 | 354 | Fail |
| Comparative Example | 13 | 1800 | 1.6 | 0.33 | - | - | - | 1500 | 1.0 | 394 | Fail |
| Comparative Example | 14 | 2000 | 1.6 | 0.36 | - | - | - | 1500 | 1.0 | 435 | Fail |
| Comparative Example | 15 | 2000 | 1.2 | 0.36 | - | - | - | 1500 | 0.8 | 463 | Fail |
| Comparative Example | 16 | 2000 | 2.3 | 0.36 | - | - | - | 1500 | 1.0 | 500 | Fail |
| Comparative Example | 17 | 2000 | 2.0 | 0.36 | - | - | - | 2000 | 1.2 | 508 | Fail |
| Comparative Example | 18 | 2000 | 2.6 | 0.36 | - | - | - | 1500 | 1.0 | 510 | Fail |
| Comparative Example | 19 | 2500 | 1.6 | 0.47 | - | - | - | 980 | 1.6 | 215 | Fail |
| Example | 20 | 1500 | 2.0 | 0.23 | 77 | 106 | Decarburization | 980 | 1.0 | 203 | Pass |
| Example | 21 | 1500 | 1.8 | 0.23 | 76 | 106 | Decarburization | 1180 | 1.0 | 230 | Pass |
| Example | 22 | 1800 | 1.6 | 0.33 | 82 | 106 | Decarburization | 1500 | 1.0 | 394 | Pass |
| Example | 23 | 1800 | 1.8 | 0.33 | 84 | 106 | Decarburization | 1500 | 1.0 | 424 | Pass |
| Example | 24 | 1800 | 2.0 | 0.33 | 88 | 106 | Decarburization | 1500 | 1.0 | 443 | Pass |
| Example | 25 | 1800 | 2.0 | 0.33 | 88 | 106 | Decarburization | 1500 | 0.8 | 523 | Pass |
| Example | 26 | 2000 | 1.6 | 0.36 | 92 | 106 | Decarburization | 1500 | 1.0 | 435 | Pass |
| Example | 27 | 2000 | 1.6 | 0.36 | 86 | 71 | Decarburization | 1500 | 1.0 | 435 | Pass |
| Example | 28 | 2000 | 1.6 | 0.36 | 63 | 35 | Decarburization | 1500 | 1.0 | 435 | Pass |
| Example | 29 | 2000 | 1.2 | 0.36 | 96 | 106 | Decarburization | 1500 | 0.8 | 463 | Pass |
| Example | 30 | 2000 | 1.8 | 0.36 | 93 | 106 | Decarburization | 1500 | 1.0 | 464 | Pass |
| Example | 31 | 2000 | 2.0 | 0.36 | 99 | 106 | Decarburization | 1500 | 1.0 | 483 | Pass |
| Example | 32 | 2000 | 2.3 | 0.36 | 101 | 106 | Decarburization | 1500 | 1.0 | 500 | Pass |
| Example | 33 | 2000 | 2.0 | 0.36 | 99 | 106 | Decarburization | 2000 | 1.2 | 508 | Pass |
| Example | 34 | 2000 | 2.6 | 0.36 | 100 | 106 | Decarburization | 1500 | 1.0 | 510 | Pass |
| Example | 35 | 2000 | 2.0 | 0.36 | 99 | 106 | Decarburization | 1500 | 0.8 | 567 | Pass |
| Example | 36 | 2500 | 1.6 | 0.47 | 131 | 141 | Decarburization | 1500 | 1.0 | 585 | Pass |
| Example | 37 | 2500 | 1.6 | 0.47 | 133 | 141 | Decarburization | 980 | 1.6 | 215 | Pass |

Comparative Examples 1 to 4 is a spot-welded joint having an index HC of less than 170. In these Comparative Examples, HAZ cracks did not occur in the vicinity of the outer peripheral side end portion of the corona bond area. Therefore, in the spot-welded joint having the index HC of less than 170, the HAZ cracks in the vicinity of the outer peripheral side end portion of the corona bond area is not a problem.

Comparative Examples 5 to 19 is a spot-welded joint having an index HC of 170 or more but $\Delta$Hv of less than 50. In these Comparative Examples, HAZ cracks occurred in the vicinity of the outer peripheral side end portion of the corona bond area.

Examples 20 to 37 is a spot-welded joint having an index HC of 170 or more and $\Delta$Hv of 50 or more. In these Examples, the HAZ cracks in the vicinity of the outer peripheral side end portion of the corona bond area was suppressed.

Reference Signs List

1 Spot-welded joint
11 Steel sheet
111 First steel sheet
112 Second steel sheet
12 Spot-welding portion
121 Nugget
122 Corona bond area
123 HAZ
C Cracks
D Indentation

**Claims**

1. A spot-welded joint comprising:

   a first steel sheet;
   a second steel sheet; and
   a spot-welding portion which joins the first steel sheet and the second steel sheet, wherein
   the first steel sheet and the second steel sheet are directly overlapped with each other,
   a tensile strength of the first steel sheet is 1500 MPa or more,
   a tensile strength of the second steel sheet is equal to or less than the tensile strength of the first steel sheet,
   a Vickers hardness from a surface of the first steel sheet to a depth of 20 $\mu$m is 95% or less of a Vickers hardness at a position of 1/4 of a sheet thickness of a base material portion of the first steel sheet,
   a carbon equivalent Ceq defined by a formula 1 of the base material portion of the first steel sheet is 0.22% or more,
   an index HC defined by a formula 2 is 170 or more,
   the spot-welding portion includes a nugget and a corona bond area which joins the first steel sheet and the second steel sheet around the nugget, and
   a Vickers hardness of 20 $\mu$m on a first steel sheet side at an outer peripheral side end portion of the corona bond area is lower by 50 Hv or more than the Vickers hardness at the position of 1/4 of the sheet thickness of the base material portion of the first steel sheet:

$$Ceq = C + Si/90 + (Mn + Cr)/100 \text{ (formula 1)}$$

$$HC = Ceq \times TS_2 \times (1 - (TS_2 \times t_2^3)/(TS_1 \times t_1^3))/\sqrt{t_2} \text{ (formula 2)}$$

   wherein an element symbol described in the formula 1 is a content in mass% of an element corresponding to the element symbol in a sheet thickness 1/4 portion of the base material portion of the first steel sheet, and
   a symbol $TS_1$ described in the formula 2 is the tensile strength in MPa of the first steel sheet, $t_1$ is a sheet thickness in mm of the first steel sheet, $TS_2$ is the tensile strength in MPa of the second steel sheet, and $t_2$ is a sheet thickness in mm of the second steel sheet.

2. The spot-welded joint according to claim 1, wherein
the base material portion of the first steel sheet includes a martensite structure.

3. The spot-welded joint according to claim 1 or 2, wherein

a Vickers hardness from the surface of the first steel sheet to a depth of 50 $\mu$m is 95% or less of the Vickers hardness at the position of 1/4 of the sheet thickness of the base material portion of the first steel sheet, and a Vickers hardness of 50 $\mu$m on the first steel sheet side at the outer peripheral side end portion of the corona bond area is lower by 50 Hv or more than the Vickers hardness at the position of 1/4 of the sheet thickness of the base material portion of the first steel sheet.

4. The spot-welded joint according to claim 1 or 2, wherein

a Vickers hardness from the surface of the first steel sheet to a depth of 100 $\mu$m is 95% or less of the Vickers hardness at the position of 1/4 of the sheet thickness of the base material portion of the first steel sheet, and a Vickers hardness of 100 $\mu$m on the first steel sheet side at the outer peripheral side end portion of the corona bond area is lower by 50 Hv or more than the Vickers hardness at the position of 1/4 of the sheet thickness of the base material portion of the first steel sheet.

5. The spot-welded joint according to claim 1 or 2, wherein

a Vickers hardness from the surface of the first steel sheet to a depth of 200 $\mu$m is 95% or less of the Vickers hardness at the position of 1/4 of the sheet thickness of the base material portion of the first steel sheet, and a Vickers hardness of 200 $\mu$m on the first steel sheet side at the outer peripheral side end portion of the corona bond area is lower by 50 Hv or more than the Vickers hardness at the position of 1/4 of the sheet thickness of the base material portion of the first steel sheet.

6. A method for manufacturing a spot-welded joint, comprising:

overlapping a first steel sheet and a second steel sheet; and
spot-welding the first steel sheet and the second steel sheet, wherein
a tensile strength of the first steel sheet is 1500 MPa or more,
a tensile strength of the second steel sheet is equal to or less than the tensile strength of the first steel sheet,
a Vickers hardness from a surface of the first steel sheet to a depth of 20 $\mu$m is 95% or less of a Vickers hardness at a position of 1/4 of a sheet thickness of a base material portion of the first steel sheet,
a carbon equivalent Ceq defined by a formula 1 of the base material portion of the first steel sheet is 0.22% or more, and
an index HC defined by a formula 2 is 170 or more:

$$Ceq = C + Si/90 + (Mn + Cr)/100 \text{ (formula 1)}$$

$$HC = Ceq \times TS_2 \times (1 - (TS_2 \times t_2^3)/(TS_1 \times t_1^3))/\sqrt{t_2} \text{ (formula 2)}$$

wherein an element symbol described in the formula 1 is a content in mass% of an element corresponding to the element symbol in a sheet thickness 1/4 portion of the base material portion of the first steel sheet, and a symbol $TS_1$ described in the formula 2 is the tensile strength in MPa of the first steel sheet, $t_1$ is a sheet thickness in mm of the first steel sheet, $TS_2$ is the tensile strength in MPa of the second steel sheet, and $t_2$ is a sheet thickness in mm of the second steel sheet.

7. The method for manufacturing a spot-welded joint according to claim 6, wherein
a Vickers hardness from the surface of the first steel sheet to a depth of 50 $\mu$m is 95% or less of the Vickers hardness at the position of 1/4 of the sheet thickness of the base material portion of the first steel sheet.

8. The method for manufacturing a spot-welded joint according to claim 6, wherein
a Vickers hardness from the surface of the first steel sheet to a depth of 100 $\mu$m is 95% or less of the Vickers hardness at the position of 1/4 of the sheet thickness of the base material portion of the first steel sheet.

9. The method for manufacturing a spot-welded joint according to claim 6, wherein
a Vickers hardness from the surface of the first steel sheet to a depth of 200 $\mu$m is 95% or less of the Vickers hardness at the position of 1/4 of the sheet thickness of the base material portion of the first steel sheet.

FIG. 1

FIG. 2

FIG. 3

FIG. 4

FIG. 5

## INTERNATIONAL SEARCH REPORT

| International application No. |
| --- |
| **PCT/JP2023/020489** |

### A. CLASSIFICATION OF SUBJECT MATTER

***B23K 11/16***(2006.01)i; ***B23K 11/11***(2006.01)i
FI:  B23K11/16; B23K11/11 540

According to International Patent Classification (IPC) or to both national classification and IPC

### B. FIELDS SEARCHED

Minimum documentation searched (classification system followed by classification symbols)

B23K11/16; B23K11/11

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2014/171495 A1 (NIPPON STEEL & SUMITOMO METAL CORP.) 23 October 2014 (2014-10-23)<br>    claims 1-2, fig. 1-4 | 1-9 |
| A | JP 2016-209919 A (JFE STEEL CORP.) 15 December 2016 (2016-12-15)<br>    claims 1-9, fig. 1-9 | 1-9 |
| A | JP 2009-1839 A (KOBE STEEL, LTD.) 08 January 2009 (2009-01-08)<br>    claims 1-3, fig. 3-7 | 1-9 |
| A | JP 2001-9573 A (SUMITOMO METAL INDUSTRIES, LTD.) 16 January 2001 (2001-01-16)<br>    claims 1-3, fig. 1-7 | 1-9 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 August 2023** | **15 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 534 227 A1

**INTERNATIONAL SEARCH REPORT**
Information on patent family members

International application No.

**PCT/JP2023/020489**

| Patent document cited in search report | | | Publication date (day/month/year) | Patent family member(s) | | | Publication date (day/month/year) |
|---|---|---|---|---|---|---|---|
| WO | 2014/171495 | A1 | 23 October 2014 | US 2016/0067814 A1 claims 1-2, fig. 1-4 EP 2987581 A1 CN 105142847 A KR 10-2015-0137104 A | | | |
| JP | 2016-209919 | A | 15 December 2016 | (Family: none) | | | |
| JP | 2009-1839 | A | 08 January 2009 | (Family: none) | | | |
| JP | 2001-9573 | A | 16 January 2001 | (Family: none) | | | |

Form PCT/ISA/210 (patent family annex) (January 2015)

24

**REFERENCES CITED IN THE DESCRIPTION**

**Patent documents cited in the description**

- JP 2022089551 A
- JP 2020082103 A

- JP 2017002384 A